# EUROPEAN PATENT APPLICATION

(11) **EP 0 526 664 A1**
(43) Date of publication of application: **10.02.1993**
(21) Application number: 91112731.4
(22) Date of filing: 29.07.1991
(51) Int. Cl.: F27D 3/00, F27D 3/06, C21B 7/18, F27B 3/18, C21C 5/52, B61C 13/04

(54) **Apparatus for preparing and feeding iron scraps to an electrical furnace**

(71) Applicant: SIBAG SCHMID INDUSTRIEBERATUNGS AKTIENGESELLSCHAFT, FL-9495 Triesen (LI)
(72) Inventor: Delmenico, Maurizio, c/o SIBAG, FL-9495 Triesen (LI); Lukic, Nikola, Jaice (YU)
(74) Representative: Trupiano, Roberto

(57) **Abstract**

Automatic apparatus for feeding to the electrical furnace batches of iron scraps in a preestablished amount and with a preestablished composition, collected from a scrap store consisting of separate compartments (A,B,C,D) arranged parallel to the line of furnaces, which apparatus comprises a self-propelled carriage (4) running along a three-rail track (1,2,3) and having two drive wheels (4a) and an idle wheel (4b), an encoder installed on board of said carriage (4) and associated with an electronic computer also installed on board of said carriage (4); with said computer being suitable for signalling and registering, at any time, the position of said carriage relatively to the compartments of the scrap store (A,B,C,D), as well as the weight of the scrap batches charged to the basket (5) on said carriage, and generating the program of execution of the charging operations by comparison with the data generated by analyses carried out on liquid steel previously carried out and stored in said computer, and then causing said carriage to return back to the head of the furnace line to enable the basket to be transferred to the melting furnace to which the scrap batch is charged.

## Description

The present invention retates to an apparatus for automatically preparing batches of iron scraps in a controlled amount and with a controlled composition, and for feeding said batches to the electrical melting furnaces, which apparatus is particularly suitable for those facilities in which the scrap store is provided in a position parallel to the line, or bay, of melting furnaces.

It is well-known that the electrical furnaces for remelting iron scraps in order to produce steel grades with not very high quality characteristics, useable, e.g., for rod irons and structural irons for building and structural steelwork, are fed with scraps with controlled characteristics and composition, i.e., subdivided into homogeneous grades according to their origin, such as, e.g., grades from the demolition of metal structures, collection grades, metal wastes, and the like. From these batches, many types of scraps have absolutely to be excluded, such as, e.g., non-iron metals, flammable and explosive materials, plastics materials and many metal alloys.

The types of scraps to be remelted are hence classified according to many categories, in conformity with general rules accepted from long time at the international level , and, save a very small number of exceptions, all these categories relate to carbon steels.

These types of scraps to be remelted are supplied already subdivided on the basis of the classes rigidly established for such scrap categories, and are stored inside separated containers or compartments (bays), each destined to contain a category of scrap, and normally lined-up in a mutually parallel position, in order to reduce the required surface areas and the distance between the scrap store and the furnaces.

The collection of scrap from the various grades of scraps is carried out by collecting from a first compartment (or bay), by means of a crane, a metered amount, which is then charged to a charging basket, which can contain up to several tens of tons of scraps; the so charged basket is the moved to the successive bay, and to it a further metered amount of a different scrap is charged; the basket is then moved, in sequence, up to the last bay, so that inside the basket amounts are charged of the various types of scraps, which correspond to the pre-determined requirements (i.e., to the melting recipe) on the basis of analyses carried out on the liquid steel previously produced. When the loading of the batch is complete, the basket is transferred above the melting furnace by means of a bridge crane and the contents thereof are discharged into said furnace.

Usually, molten steel obtained from the mixture of said scrap categories (grades) should contain carbon at a level not higher than 0.5%, and a total of other elements ("oligo-elements"), i.e., of Cr + Ni + Cu + Sn at a maximum level of 0.6%-0.9%.

The present technique consisting in moving the basket by means of a crane and positioning said basket in sequence before the bays of the scrap store in order to draw from each of them the scrap amount as established by the melting recipe involves a first drawback consisting in that, if, at the end of the charging step, the weight of material charged to the basket is, e.g., too high relatively to as prescribed, the remedy consists in discharging a portion of the charged scrap, i.e., substantially, the scrap charged from the last bay, so that the composition of the batch is changed, even if not excessively.

Furthermore, the use of a crane in order to move a basket which, when the charging step is complete, may reach as high weight values as 50 tons, requires rather long operating times, and specialized staff, so the productivity can never by really high, and the production costs are consequently heavily affected.

In order to obviate these drawbacks, a basket can be installed on a carriage running along tracks, but this solution involves, in case of a scrap store parallel to the line of melting furnaces, the use of tracks with a large bending radius to cause the basket-carried carriage to be diverted to run along directions at 90° to each other, in that, owing to the nature of the material to be handled, neither shunts nor revolving platforms are allowed to rotate the carriage by 90°. In practice, hence, the use of tracks with a large bending radius and the need for using, for a carriage carrying a rather heavy basket, a very wide gauge, of at least two metres, obviously cause very long running paths and considerably long times, which are not economically acceptable.

In fact, for baskets of 50 tons of weight and tracks with a 2-metre gauge, the bending radius to divert the carriage by an angle of 90° would result to be comprised within the range of from 40 to 60 metres, which is absolutely unacceptable from a practical viewpoint in case the scrap store and the furnace line, parallel to each other, are both enclosed inside a shed, or the like.

Therefore, a purpose of the present invention is of providing an apparatus for preparing and feeding to an electrical furnace batches of iron scraps in a controlled amount and with a controlled composition, which is so conceived as to obviate the drawbacks and limitations which affect the drawing and feeding systems used to date in the facilities in which the scrap store is parallel to the furnace line, or anyway with access through bends, shunts or translators, and, above all, so structured as to make it possible batches with a predetermined composition, obtained by comparison with the data generated by the analyses previously carried out on liquid steel, to be automatically collected in a predetermied amount, said batches collected from the scrap store to be transferred to the furnace within short times and according to very short guided traveling paths, and also an automatic, continuous monitoring to be carried out of the movements and of the weight of the individual graded batches collected in sequence from the scrap store.

Another purpose of the present invention is of providing an apparatus for charging iron scraps to the electrical melting furnace, which apparatus is so structured, as to be of reduced overall dimensions, to be highly reliable and useable, practically without supplying the existing structures, with any throughput values, with any modifications.

These, and still further, purposes, which will be clearer from the following disclosure, are achieved by an apparatus for preparing, collecting and feeding to the electrical furnace, in a totally automatic way, batches of iron scraps in a controlled amount and with a controlled composition, which apparatus can be used in the facilities equipped with a scrap store arranged with separate compartments and extending parallel to the line of furnaces or anyway with access through bends, shunts or translators, which apparatus is constituted, according to the present invention:
- by a three-rail track installed opposite and parallel to the charging side of a scrap store arranged according to a plurality of lined-up compartments or bays, each containing scraps classified according to well-defined categories, and then bent by approximately 90°, with its end being close to at least one end of the line of the melting furnaces;
- by a self-propelled carriage bearing a usual charging basket removable from said carriage and positioned on an automatic weighing cell or the like, which carriage is provided with three wheels arranged in a triangle-like configuration or the like, with both outermost wheels being drive wheels and running on the outermost rails and the third wheel, which is an idle wheel, runs on the intermediate rail, with said three rails being positioned parallel to one another and at a same distance along the straight portions of the track, whilst along the stretch bent at 90°C, the third, intermediate rail is shifted, while remaining still parallel to the outer rails, relatively to the centre line of the track and, more precisely, towards the outermost rail, so as to allow said idle wheel to follow the bending of the track with the axis of the other wheels being always kept perpendicular to the external rails; and
- an analog-digital encoder associated with the axis of revolution of said idle wheel and enslaved to an electronic computer or microprocessor or terminal, also installed on board of said carriage; with said computer or microprocessor or terminal being suitable for displaying and recording, at any time, the position of said carriage, the weight of the batches successively charged to the basket, for generating the program of execution of the charging operations by means of the comparison with the data generated by analyses previously carried out on the liquid steel and stored in said computer, and then of causing said carriage to be returned back to the head of the furnace line to enable the basket contents to be discharged into the melting furnace, by means of a bridge crane, or the like.

More particularly, with said electronic weighing cell installed on the self-propelled carriage display means are provided, such as, e.g., display lamps of different colours, for example of traffic-light type, which are suitable for displaying to the operator which performs the loading of the basket by means of the crane and the mechanical or electromagnetic bucket means, any possible differences, in excess or in defect, in the weight of the individual amounts collected, relatively to the values preset in said computer, in order to make it possible said differences in weight to be immediately corrected before the basket with its complete charge is automatically returned back to its starting position, and then its contents are discharged into the furnace.

Furthermore, said three-wheel carriage is provided with motor means and differential gear on its outermost wheels, whilst the front, central wheel thereof is provided, along its peripheral contour, with two mutually opposite, circular, radially protruding edges, suitable for constituting means for guiding and retaining said wheel on said rail during the movements of the carriage, in particular along the bent track stretches.

Further features and advantages of the present invention can be better evidenced by the following full disclosure of a preferred, non-exclusive, form of practical embodiment thereof, made by referring to the accompanying drawing tables, supplied for merely indicative purposes, in which:
Figure 1 shows, schematically, in plan top view, a scrap store with lined-up compartments, positioned parallel to a line of melting furnaces, with which an automatic-control apparatus for collecting and feeding scrap batches to said furnaces is associated, which apparatus falls within the purview of the present invention;
Figure 2 shows, schematically and in side elevation view, a three-wheel basket-carrier carriage used in the apparatus of Figure 1;
Figure 3 shows, schematically, a detail of the three-rail track which makes a part of the apparatus of Figure 1; and
Figure 4 shows a further detail of the three-rail track according to the preceding figures.

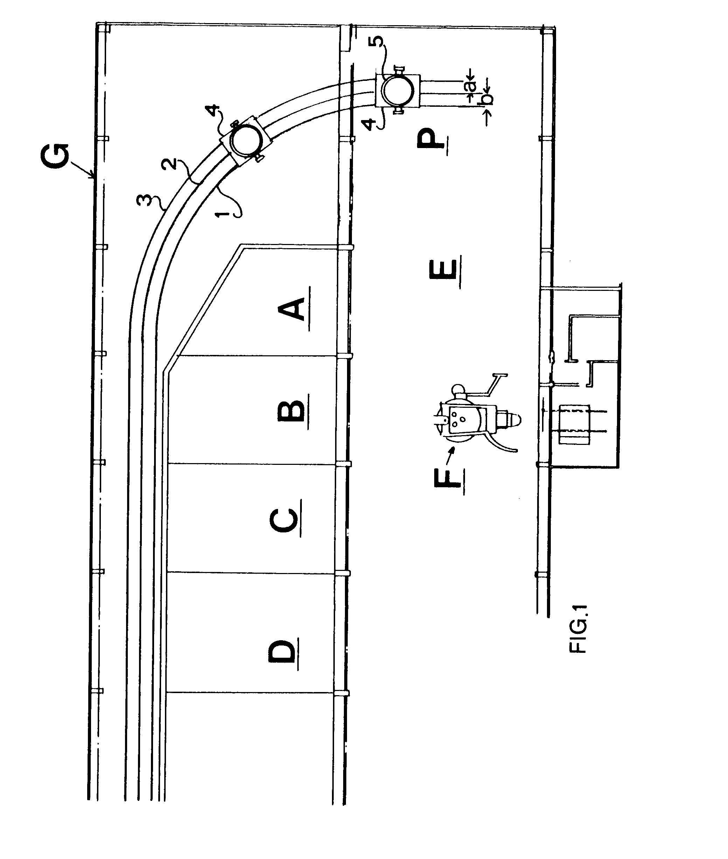

Referring to the above figures, and, in particular, to Figure 1, the apparatus according to the present invention is associated with a facility for remelting iron scraps, which is equipped with a scrap store with separated, lined-up scrap compartments, positioned parallel to, and at a short distance from, a line of melting furnaces.

In fact, this type of facility is provided with an aligned row of masonry, open-roof compartments or bays indicated, e.g., with A, B, C, D... and so forth, inside each of which scraps are stored which belong to a well defined category or class, all of said scraps being constituted by carbon steel or cast iron.

A line of electrical melting furnaces, of which furnaces, for the sake of simplicity, just one is indicated with F, is positioned parallel to the line defined by said scrap-containing bays.

Between the scrap store and the furnace line a lane E is provided, over which a usual bridge crane (not shown in the figure) is installed in order to transfer each scrap-filled basket to the furnace into which the scrap will have to be discharged by known means, as better explained in the following.

Normally, the scrap store and the line of the melting furnaces are both installed inside a shed or the like, the peripheral track of which is indicated with G in Figure 1.

The automatic apparatus according to the present invention, which is expressly useable in a remelting facility of the above disclosed type, is substantially constituted by a track consisting of three rails 1, 2 and 3, running parallelly to the external side (i.e., the charging side) of the scrap store A, B, C... and in the nearby thereof; the same track is then bent so as to come to end, at the end of said bend, in the lane E and, more precisely, in the head region P of said lane. The bending radius is as short as possible, relatively to the weight the carriage shall have to convey and to the required gauge for said carriage, as is better explained in the following.

On said three-rail track a three-wheel carriage 4 runs. Said carriage 4 consists of a flat chassis of substantially triangular shape on which a usual loading basket 5 capable of containing the scrap is installed with possibility of removal and with the interposition of an electronic weighing cell, or of another device of known type, not depicted in the figures.

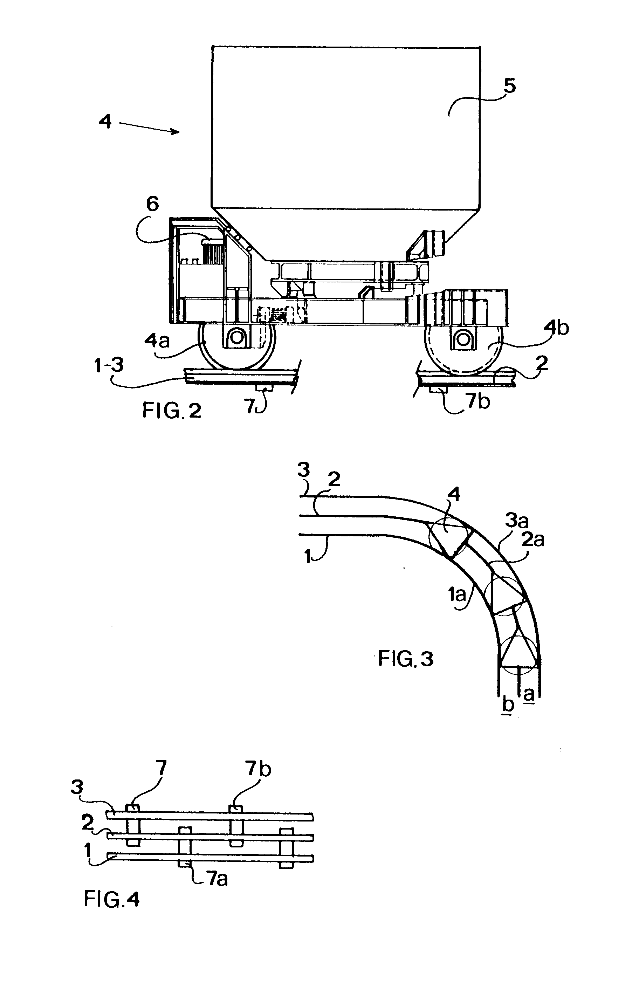

The rear wheels 4a of the carriage are provided with a differential gear, or with an analogous electrical drive means and are actuated by a ratiomotor 6 (Figure 2), and the front wheel 4b is idling on its axle. It shoukd be stated that in order to allow a four-wheel carriage, which, owing to the very large weight of the transported load, requires a very large gauge, of up to approximately 3 metres, to run along a bend of 90° of the two-rail track, a bending radius of more than 50 metres would be required; however, in this case, the necessary room would not be available in the facilities with scrap store parallel to the line of the furnaces, or anyway accessible by means of bends, shunts, and so forth, and the running times of the carriage would moreover be very long.

In order to obviate these drawbacks, according to the present invention a three-rail track is provided, which is so accomplished as to allow a three-wheel carriage to run along a bend at 90° with a much shorter bending radius, e.g., of 8-12 metres only.

For that purpose, the track consists of three rails 1, 2 and 3, parallel to one another, with the outermost rails 1 and 3 being always at a same distance from each other; on the contrary, the central rail 2 is positioned equidistant from the external rails only along the rectilinear portions of the track, whilst in the portion bent at 90° of the track, said central rail is shifted relatively to the centre line of the track, while still being parallel to the other two rails; the shift is towards the external rail in that the carriage, when traveling along the bend, having to retain the axis of its drive wheels 1 and 3 always perpendicular to the portions 1 a and 3a (Figure 3) of the outermost rails 1 and 2, will shift its front, idle wheel 4b towards the bent portion 3a of the rail external to the bend, i.e., said central wheel will be shifted out of the centre line of the track. The position of the internal rail 2 relatively to the outermost rails 1 and 3 is schematically depicted in Figure 3. From this schematic view, one may see that, whilst along the rectilinear stretches the central rail 2 runs along the centre line of the track, along the 90° bend of the track, the bent portion 2a of said central rail is at a distance "b" from the bent portion of the rail 1 a, which is longer then the distance "a" from the bent portion of the external rail 3a; only by means of such a layout, one can cause the carriage to run along a bend with a very short bending radius; furthermore, the greater the distance "b" relatively to the distance "a", the shorter the bending radius which can be adopted.

In practice, the use of three rails and of a three-wheel carriage makes it possible very large gauges (i.e., distances between the external wheels) to be used, which is necessary, owing to the considerably high weight which the carriage is designed to transport (diameter and heigh of the barycenter) with very short bending radii of the same track.

The central idle wheel 4b is then provided, along its peripheral contour, with two annular edges with a larger diametre than of the same wheel, the task of which is of keeping said wheel guided on the rail 2, in particular along the bend between the two straight rail stretches.

The apparatus disclosed hereinabove is then equipped with electronic devices comprising an analog-digital encoder (not shown in the figures) of the type with brushes, of optical type, or the like, keyed onto the axle of the idle wheel 4b of the carriage or onto the same wheel, an electronic computer, or microprocessor or terminal, also installed on board of the carriage and a set of display means, of different colours, of electric type or the like, associated with the electronic weighing cell and with the same carriage.

The encoder continuously detects the angular shifts of the idle wheel and sends the signals to the computer, which measures them and stores them in its storage memory; in such way, the positions of the carriage are monitored at any time; the computer receives the signals output by the weighing cell, i.e., the signals corresponding to the weights of the batches collected from the individual bays and charged to the basket, and the signals corresponding to the end batch loaded inside the basket, stores them, then compares them to the preset data, obtained from analyses carried out on the previously manufactured liquid steel and generates the melting recipe-program of the new batch to be collected; this melting recipe, together with the data emitted by the encoder as regards the movements of the carriage, governs all the necessary actions in order to execute the subsequent loading and weighing operations, and operations of transfer of the end batch to the position in which the basket is taken by the bridge crane, to be transferred to the nearby of the furnace and then, after lifting and shifting the electrodes, its contents to be discharged into the furnace.

The sequence of the steps of intervention of the apparatus according to the present invention can be summarized as specified in the following.

Considering, for the sake of simplicity of exposure, that the charging apparatus is operating, at the end of a casting cycle a sample of liquid steel is drawn from the furnace and is analysed, so as to detect the carbon content thereof, on the basis of the scrap composition used.

If the carbon content and the other characteristics result to correspond to the prefixed values, the melting recipe and the operating sequence preset in the computer associated with the carriage remain unchanged and are used again in order to collect a successive scrap batch; if, on the contrary, the characteristics detected on the liquid steel do not correspond to the required values, the data from the analysis are input to the computer, which compares them to those previously entered and stored, and then generates the new melting recipe (i.e., the new composition); this new melting recipe is the one which will subsequently governs all the operations of scrap collection, weighing and of carriage transfer, substantially as explained in detail in the following.

The carriage 4 is positioned in front of a bay as indicated by the computer and at this bay is charged, by means of the crane with an either mechanical or magnetic bucket means, with the prescribed amount of scrap belonging to the scrap category stored inside this particular bay.

When the operation of charging the scrap belonging to this category is ended, the electronic weighing cell signals the weight of this batch. If this weight corresponds to the computer preset weight, the carriage is transferred to a successive scrap bay; if, on the contrary, the weight exceeds the prefixed value, a warning means generates a suitable warning signal, e.g., a light signal, and the operator discharges a suitable amount of scrap until the weigh of the charged batch resuls to be the correct one, whilst, should said weight be lower than the preset value, a different signal is emitted, so that a further amount of scrap is charged to the basket until the weight results to be the correct one.

When the weight of the charged batch has reached its correct value, the carriage is moved to the subsequent bay, where the operations of loading and possible correction of the loaded material amount are carried out, as at the preceding bay. At the end of each loading step of scrap from each different scrap category, the computer stores the data and transfers the carriage to the successive bay, and so forth, until the basket loading is completed with the scrap batches coming from the preestablished scrap categories.

When the end load inside the basket has reached the value stored in the computer, the carriage returns back to its starting position, i.e., in its position generally indicated with "P" in Figure 1; from this position, the basket 5 is taken by the bridge crane and is transferred to the position 5a (Figure 1) and then its contents are discharged into the furnace F in the usual way.

At the end of the casting cycle, the liquid steel is analysed and the analytical data is input to the computer installed on the carriage, which computer processes, if necessary, a new melting recipe, i.e., basket loading program.

The apparatus according to the present invention makes it possible, with the aid of the computer, besides the advantages mentioned hereinabove, also the advantage to be achieved that the presently used radio connections between the various operators are eliminated. Said radio connections are always very heavily disturbed, owing to the magnetic fields generated by the electrical installations. Furthermore, the use of a three-wheel carriage causes all the wheels to be always loaded, so that any risks of carriage derailing or slipping off the rails are avoided even if the carriage travels at rather high speeds.

Still according to the invention, in order to anchor the three-rail track to the ground, the usual sleepers of 1,435 mm of length can be used; in fact, the latter are positioned staggered to each other, as indicated, e.g., with 7, 7a, 7b, and so forth, in Figure 4.

Finally, it is obvious that the finding, as disclosed hereinabove may be supplied, when practiced, with further modifications and structural and functional variants without departing from the scope of protection of the same finding.

## Claims

1. Automatic apparatus for collecting and feeding to the electrical furnace batches of iron scraps in a controlled weight and with a controlled composition, useable in the facilities equipped with a scrap store parallel to the furnace line, or anyway with access through bends, shunts or translators, characterized in that said apparatus is constituted:
- by a three-rail track installed opposite and parallel to the charging side of a scrap store arranged according to a plurality of lined-up compartments or boxes, each containing scraps classified according to well-defined categories, and then bent by approximately 90° with its end being close to at least one end of the line of the melting furnaces;
- by a self-propelled carriage bearing a usual charging basket removable from said carriage and positioned on an automatic weighing cell or the like, which carriage is provided with three wheels arranged in a triangle-like configuration, with both outermost wheels being drive wheels and running on the outermost rails, and the third wheel , which is an idle wheel , being running on the intermediate rail, with said three rails being positioned parallel to one another and at a same distance along the straight portions of the track, whilst along the stretch bent at 90°C, the third, intermediate rail is shifted, while remaining still parallel to the outer rails, relatively to the centre line of the track and, more precisely, towards the outermost rail, so as to allow said idle wheel to follow the bending of the track with the axis of the other wheels being always kept perpendicular to the external rails; and
- an analog-digital encoder associated with the axis of revolution of said idle wheel and enslaved to an electronic computer or microprocessor or terminal, also installed on board of said carriage; with said computer or microprocessor or terminal being suitable for displaying and recording, at any time, the position of said carriage, the weight of the batches sequentially charged to the basket, generating the program of execution of the charging operations by comparing the data generated by analyses previously carried out on the liquid steel and stored in said computer, and then causing said carriage to be returned back to the head of the furnace line to enable the basket contents to be discharged into the melting furnace, by means of a bridge crane, or the like.

2. Apparatus according to claim 1, characterized in that on said carriage display means are provided, such as optical display means of different colours, or electrical display means, which are suitable for signalling to the operator responsible for loading the basket , any possible differences, in excess or in defect, in the individual amounts collected, relatively to the values preset in said computer, in order to make it possible said differences to be immediately corrected before the basket with its complete charge is transferred by the carriage back to its starting position.

3. Apparatus according to claim 1, characterized in that said three-wheel carriage is provided with motor means and with a differential gear, or another, analogous electrical system, on its rear wheels, whilst the front central wheel is installed idle in its axle.

4. Apparatus according to claims 1 and 3, characterized in that said central, idle wheel is provided, along its peripheral contour, with two mutually opposite, circular, radially protruding edges, suitable for constituting means for guiding and retaining said wheel on said rail during the movements of the carriage, in particular along the bent track stretches.

5. Apparatus according to the preceding claims, characterized in that in order to anchor the three rails to the ground, normal sleepers, positioned staggered relatively to, and equidistant from, each other are provided.

6. Apparatus according to the preceding claims, characterized in that said three-rail track shows a stretch bent with a bend of approximately 90°, with a bending radius comprised within the range of from 8 to 12 meters, and a gauge of up to about 2.9 metres.

7. Process for automatically collecting and feeding to the electrical furnace batches of iron scraps in a controlled weight and with a controlled composition, collected from a scrap store consisting of separate compartments each containing scrap grades classified according to quality categories and arranged parallel to the line of the melting furnaces, characterized in that said process consists of:
- using a self-propelled carriage bearing an automatic weighing cell and, above the latter, a usual loading basket, which carriage can translate parallelly to said scrap store;
- prearranging, on said carriage, an analog-digital encoder suitable for detecting the positions of the carriage, and associated with an electronic computer or microprocessor;
- analysing a sample of liquid metal drawn from the furnace, and inputting the data obtained from said analyses to said computer, so as to obtain a program of collection and loading of the various scrap grades into the basket, with a preset composition and in a preset weight; then
- causing said carriage to be positioned, on command by said computer, in succession, in front of the various compartments which constitute the scrap store, so as to make it possible the scrap to be charged to the basket in the pre-established amount to be collected from each compartment, then
- monitoring the weight of each partial batch collected, with any possible weight differences relatively to the amounts stored in the memory of said computer, so as to make it possible said weight differences to be corrected immediately; then
- when the charging step is complete, causing said carriage to be moved to its starting position, so as to make it possible the loaded basket to be transferred in front of the furnace and the contents of the basket to be discharged into said furnace; and, finally
- drawing a sample of liquid metal from the furnace, analysing it and inputting the obtained data to said computer in oder to generate the collecting program for a subsequent scrap batch.
